# EUROPÄISCHE PATENTANMELDUNG

(11) **EP 1 022 883 A2**
(43) Veröffentlichungstag der Anmeldung: **26.07.2000**
(21) Anmeldenummer: 00101278.0
(22) Anmeldetag: 25.01.2000
(51) Int. Cl.: H04L 12/56, H04L 29/06, H04N 7/16, G06F 9/445

(54) **Verfahren zum Realisieren einer Leistungsmerkmalsteuerung in einem Kommunikationsdatennetz**

(30) Priorität: 25.01.1999 DE 19902753
(71) Anmelder: SIEMENS AKTIENGESELLSCHAFT, 80333 München (DE)
(72) Erfinder: Klaghofer, Karl, 81373 München (DE); Korpi, Markku, 82319 Starnberg (DE); Remmele, Werner, 86415 Mering (DE); Bonk, Thomas, Dr., 81929 M-nchen (DE)

(57) **Zusammenfassung**

In einem Kommunikations-Datennetz gemäß dem Standard ITU-T H.323, wird, veranlaßt durch einen in einem Kommunikations-Endgerät verarbeiteten Befehl zum Realisieren eines Leistungsmerkmals eine Aufforderung zum Übermitteln einer Steuersoftware für die Leistungsmerkmalsteuerung an eine zentrale Einrichtung im Kommunikations-Datennetz übermittelt.
Die angeforderte Steuersoftware wird daraufhin von der zentralen Einrichtung an das Kommunikations-Endgerät übermittelt und in diesem temporär gespeichert. Durch Abarbeiten dieser Steuersoftware führt es danach die Leistungsmerkmalsteuerung durch.

## Beschreibung

Die Erfindung betrifft ein Verfahren Zum Realisieren einer Leistungsmerkmalsteuerung eines Leistungsmerkmals für Echtzeitkommunikation in einem Kommunikations-Datennetz gemäß dem Standard ITU-T H.323.

In einem Kommunikations-Datennetz gemäß dem Standard ITU-T H.323 werden viele Leistungsmerkmale dezentral in den beteiligten Endgeräten gesteuert. Eine hierzu erforderliche Leistungsmerkmalsteuerung wird in den beteiligten Endgeräten abgearbeitet. Die dies ermöglichende Software ist in diesen Endgeräten gespeichert und installiert.

Der Standard ITU-T H.450 beschreibt zusätzliche Leistungsmerkmale für ein Kommunikations-Datennetz gemäß dem Standard ITU-T H.323. So beschreibt die ITU-T Recommendation H.450.2 "Call Transfer Supplementary Service for H.323" vom Februar 1998 (datiert 27. Januar 1998) die Abwicklung eines Leistungsmerkmals Rufumlenkung, bei der die Leistungsmerkmalsteuerung verteilt in zwei Endgeräten beziehungsweise in einem Endgerät und in einer Gatekeeper-Funktion abläuft. In gleicher Weise werden die in der ITU-T Draft Recommendation H.450.5 "Call Park and Call Pickup Supplementary Service for H.323" vom September 1998 und in der ITU-T Draft Recommendation H.450.4 "Call Hold Supplementary Service for H.323" vom September 1998 beschriebenen Leistungsmerkmale Parken eines Rufs, Übernehmen eines Rufs und Halten eines Rufs dezentral gesteuert.

Um solche zusätzlich eingeführten Leistungsmerkmale Realisieren zu können, muß an den beteiligten Endpunkten, also in den beteiligten Endgeräten und gegebenenfalls in beteiligten Servern zum realisieren von Gatekeeper-Funktionen oder Proxy-Funktionen die erforderliche Steuersoftware installiert sein. Der Benutzer eines Endgerätes in einem Kommunikations-Datennetz gemäß dem Standard ITU-T H.323 muß die erforderliche Software installieren, bevor er ein Leistungsmerkmal realisieren möchte. Üblicherweise weiß der Benutzer eines Endgerätes nicht im voraus, welche Leistungsmerkmale er irgendwann realisieren möchte. Falls er daher möchte, daß sein Endgerät möglichst alle Leistungsmerkmale unterstützt, erfordert dies einen großen Programmspeicher, der regelmäßig aktualisiert werden muß.

Aufgabe der vorliegenden Erfindung ist es, die Realisierung einer Leistungsmerkmalsteuerung eines Leistungsmerkmals für Echtzeitkommunikation in einem Kommunikations-Datennetz gemäß dem Standard ITU-T H.323 bedarfsweise zu ermöglichen.

Diese Aufgabe löst die Erfindung durch ein Verfahren mit folgenden Schritten: Veranlaßt durch einen in einem Kommunikations-Endgerät verarbeiteten Befehl zum Realisieren des Leistungsmerkmals wird eine Aufforderung zum Übermitteln einer Steuersoftware für die Leistungsmerkmalsteuerung an eine zentrale Einrichtung im Kommunikations-Datennetz übermittelt. Die Steuersoftware wird von der zentralen Einrichtung an das Kommunikations-Endgerät übermittelt und in diesem temporär gespeichert. Die Leistungsmerkmalsteuerung wird durch Abarbeiten der Steuersoftware im Kommunikations-Endgerät ausgeführt.

Der Befehl zum Realisieren des Leistungsmerkmals kann beispielsweise im Ruhezustand des Kommunikations-Endgerätes von einer Benutzeroberfläche wie Tastatur oder Maus veranlaßt werden. Er kann aber auch während eines bestehenden Kommunikationsvorgangs von einer im Endgerät ablaufenden Anwendung veranlaßt werden, beispielsweise, falls ein fernes Endgerät bei einem versuchten Verbindungsaufbau einen Besetzt-Zustand signalisiert. Darüber hinaus kann der Befehl zum Realisieren des Leistungsmerkmals von einem fernen Endpunkt, also einem anderen Endgerät oder beispielsweise einer Gatekeeper-Funktion per Signalisierung übermittelt werden.

Ein erfindungsgemäßes Verfahren setzt voraus, daß innerhalb des Daten-Kommunikationsnetzes eine zentrale Einrichtung vorgesehen ist, die auf Anfrage für bestimmte Leistungsmerkmalsteuerungen erforderliche Software übermittelt. An eine solche zentrale Einrichtung, beispielsweise einen Server im Kommunikations-Datennetz, wird auf einen Befehl zum Realisieren des Leistungsmerkmals hin eine Aufforderung zum Übermitteln einer Steuersoftware für die Leistungsmerkmalsteuerung übermittelt. Eine solche Aufforderung wird beispielsweise von der Anwendungsprogramm-Schnittstelle API (vom englischsprachigen Ausdruck Application Programming Interface) über einen HTTP-Protokollstapel über Datenbasisschnittstellen (z.Bsp. ODBC) oder aber auch über H.450-Protokolle abgewickelt. Das daraufhin erfolgende Übermitteln und Laden der Steuersoftware kann ebenfalls mit Hilfe von auf HTTP basierenden Protokollen, beispielsweise nach Art eines JAVA-Applets, erfolgen, aber auch mit Hilfe von auf H.450 basierenden Protokollen.

Wenn die von der zentralen Einrichtung an das Kommunikations-Endgerät übermittelte Steuersoftware in diesem temporär gespeichert und installiert wird, wird der Programmspeicher des Endgerätes nicht unnötig belastet. Trotzdem kann die Leistungsmerkmalsteuerung durch Abarbeiten der Steuersoftware im Kommunikations-Endgerät ausgeführt werden.

Wie oben bereits erwähnt, kann der Befehl zum Realisieren des Leistungsmerkmals von einem fernen Endpunkt, also einem anderen Endgerät oder beispielsweise einer Gatekeeper-Funktion per Signalisierung, zum Beispiel gemäß ITU-T H.450, übermittelt werden. In diesem Fall sieht eine vorteilhafte Ausgestaltung eines erfindungsgemäßen Verfahrens vor, daß dieser ferne Endpunkt auch die Aufforderung zum Übermitteln der Steuersoftware für die Leistungsmerkmalsteuerung an die zentrale Einrichtung im Kommunikations-Datennetz übermittelt.

Ein Vorteil einer solchen Ausgestaltung ist, daß das Kommunikations-Endgerät erst in den Leistungsmerkmalablauf aktiv eingebunden wird, nachdem die erforderliche Software installiert ist.

Bei Echtzeit-Anwendungen sollte die Zeitverzögerungen bis zum Ausführen einzelner Abläufe möglichst gering sein. Demnach ist ein weiterer Vorteil der letztgenannten Ausgestaltung eines erfindungsgemäßen Verfahrens ein möglicher Zeitgewinn durch frühzeitiges Übermitteln der Aufforderung an die zentrale Einrichtung.

Darüber hinaus kann in einer anderen Ausgestaltung eines erfindungsgemäßen Verfahrens selbstverständlich das Kommunikations-Endgerät selbst die Aufforderung zum Übermitteln der Steuersoftware an die zentrale Einrichtung im Kommunikations-Datennetz übermitteln.

Falls in einem Kommunikations-Endgerät die zum Realisieren eines Leistungsmerkmals erforderliche Software bereits gespeichert und installiert ist, ist das Anfordern dieser Software bei der zentralen Einrichtung nicht erforderlich. Die bisher beschriebenen Ausgestaltungen eines erfindungsgemäßen Verfahrens würden demnach eine unnötige Datenübertragung bewirken. Eine Weiterbildung eines erfindungsgemäßen Verfahrens sieht daher vor, daß im Kommunikations-Endgerät veranlaßt durch den im Kommunikations-Endgerät verarbeiteten Befehl zum Realisieren des Leistungsmerkmals geprüft wird, ob die erforderliche Steuersoftware für die Leistungsmerkmalsteuerung verfügbar ist, und daß nur bei fehlender Verfügbarkeit dieser Steuersoftware die Aufforderung zum Übermitteln der Steuersoftware an die zentrale Einrichtung im Kommunikations-Datennetz übermittelt wird.

Falls die Aufforderung zum Übermitteln der Steuersoftware für die Leistungsmerkmalsteuerung von einem fernen Endpunkt an eine zentrale Einrichtung im Kommunikations-Datennetz übermittelt wird, kann in einer weiteren Ausgestaltung eines erfindungsgemäßen Verfahrens eine Einrichtung am fernen Endpunkt des Kommunikations-Datennetzes prüfen, ob die erforderliche Steuersoftware für die Leistungsmerkmalsteuerung in dem Kommunikations-Endgerät verfügbar ist. Nur bei fehlender Verfügbarkeit dieser Steuersoftware wird dann vom fernen Endpunkt an die zentrale Einrichtung die Aufforderung zum Übermitteln der Steuersoftware an das Kommunikations-Endgerät übermittelt.

Die Einrichtung am fernen Endpunkt kann beispielsweise mit Hilfe einer vom Kommunikations-Endgerät empfangenen, die Berechtigungen und technischen Möglichkeiten des Kommunikations-Endgerätes angebenden Terminal-Capability-Meldung prüfen, ob die erforderliche Steuersoftware für die Leistungsmerkmalsteuerung in dem Kommunikations-Endgerät verfügbar ist.

Nachstehend wird die Erfindung an Hand eines Ausführungsbeispiels unter Bezugnahme auf die Figuren näher erläutert.
Figur 1 zeigt ein Ausführungsbeispiel eines Ablaufplans der wesentlichen Teile eines erfindungsgemäßen Verfahren, wenn ein erstes Endgerät eine Leistungsmerkmalanfrage zum Parken einer bestehenden Verbindung an ein zweites Endgerät absenden möchte.
Figur 2 zeigt ein Ausführungsbeispiel eines im Verfahren gemäß Figur 1 verwendeten Kommunikations-Endgeräts in schematischer Blockdarstellung eines erweiterten Protokoll-Schichtmodells (Protocol Stack).

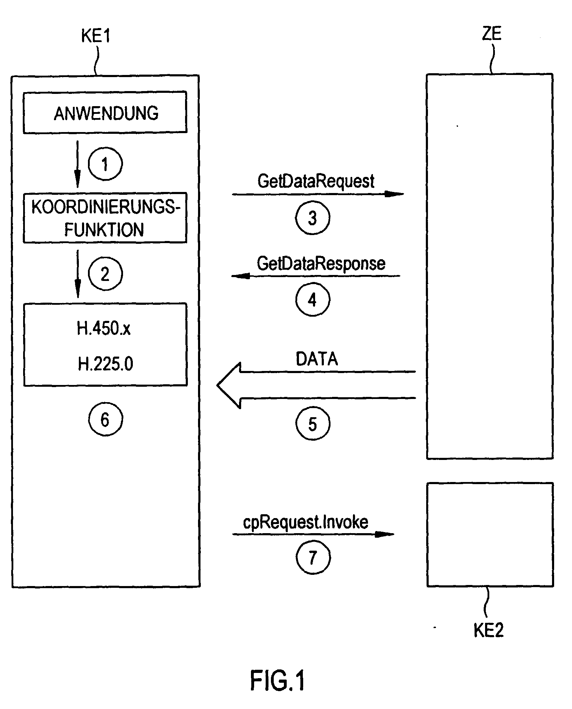

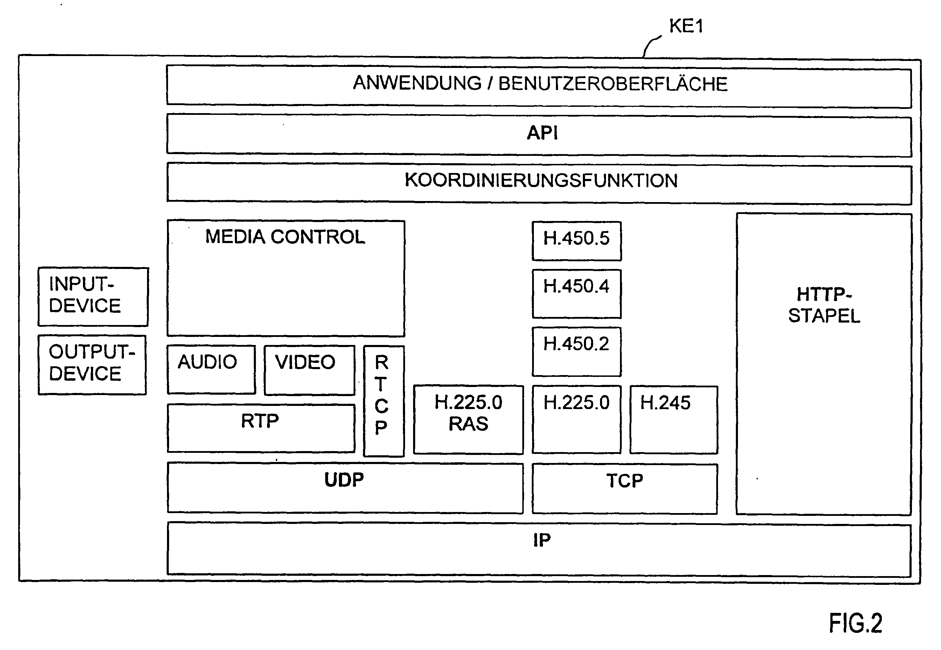

In Figur 2 ist ein Ausführungsbeispiel eines Kommunikations-Endgeräts KE1 in schematischer Blockdarstellung in Form seines erweiterten Protokoll-Schichtmodells dargestellt. Um die Darstellung der Figur 1 verständlicher erläutern zu können, wird zuerst dieses Kommunikations-Endgerät KE1 gemäß Figur 2 beschrieben.

Wie in Netzen gemäß ITU-T H.323 üblich, basiert die Kommunikation des Endgeräts KE1 auf dem Internetprotokoll IP. Aufbauend auf dem Internetprotokoll IP ist in Figur 2 in der Mitte der Protokollstapel der die Rufsteuerung behandelnden Signalisierung dargestellt.

Hier ist aufbauend auf dem Internetprotokoll IP und dem Signalisierungsprotokoll TCP ein Funktionsmodul H.225.0 gemäß dem Protokoll ITU-T H.225.0 für die Signalisierung der Basisrufsteuerung in H.323-Netzen vorgesehen. Beispielhafte Meldungen dieses Funktionsmoduls H.225.0 sind SETUP oder CONNECT.

Außerdem aufbauend auf dem Signalisierungsprotokoll TCP ist ein Funktionsmodul H.245 gemäß dem Steuerprotokoll ITU-T H.245 vorgesehen. Dieses Funktionsmodul H.245 dient unter anderem zum Austauschen von TerminalCapability Meldungen, also zum Abgeben und Empfangen von Information bezüglich Endgerätefähigkeiten. Außerdem dient dieses Funktionsmodul H.245 dem Festlegen von Aufgabenverteilungen wie Master- bzw. Slave-Funktionen und zum Öffnen und Schließen von zur Nutzdatenübertragung dienenden logischen Kanälen.

Auf dem Funktionsmodul H.225.0 setzen Funktionsmodule zusätzlicher Leistungsmerkmalsteuerungen auf wie zum Beispiel ein Funktionsmodul H.450.2 zum realisieren einer Rufumlenkungs-Funktion, ein Funktionsmodul H.450.4 zum realisieren einer Halten-Funktion , und ein Funktionsmodul H.450.5 zum realisieren einer Funktion "Ruf parken" oder "Ruf übernehmen" des Standards ITU-T H.450.

In der Figur 2 links neben dem soeben beschriebenen Signalisierungsstapel ist ein Nutzdatenstapel dargestellt. Auch dieser basiert auf dem Internetprotokoll IP, auf dem UDP und darauf wiederum ein Echtzeitprotokoll RTP (vom englischsprachigen Ausdruck Real Time Protokoll)aufgesetzt ist. Neben dem Echtzeitprotokoll RTP sind noch ein Echtzeitsteuerprotokoll RTCP und der die Bereiche Registrierung, Administration und Status betreffende Teil H.225.0 RAS des Steuerprotokolls gemäß ITU-T H.225.0 auf dem Protokoll UDP abgestützt.

Auf dem Echtzeitprotokoll RTP aufbauend sind Codecs oder zumindest Decoder für Audio und Video AUDIO, VIDEO vorgesehen. Solche Audiocodecs AUDIO sind beispielsweise gemäß einem der Standards ITU-T G.711, ITU-T G.723.1, ITU-T G.728 ausgelegt. Auch ISO MPEG4 definiert Audiodecoder AUDIO. ISO MPEG4 definiert auch entsprechende Video-Decoder VIDEO. Bei der Verwendung von Decodern gemäß ISO MPEG4 sind gegebenenfalls proprietäre Coder in einem Kommunikations-Endgerät KE1 enthalten.

Das Echtzeitsteuerprotokoll RTCP und die Codecs bzw. Decoder für Audio und Video AUDIO, VIDEO werden von einer Mediensteuerung MEDIA CONTROL gesteuert, die unter anderem für das Zusammenspiel von im Kommunikations-Endgerät KE1 vorgesehenen Media-Eingabemitteln INPUT-DEVICE und Media-Ausgabemitteln OUTPUT-DEVICE zuständig ist. Media-Eingabemitteln INPUT-DEVICE sind hierbei beispielsweise (In Figur 2 nicht explizit dargestellte) Kameras für Videodaten, Mikrophone für Audiodaten oder Schnittstellen zu nicht im Kommunikations-Endgerät KE1 enthaltenen Datenquellen. Ausgabemitteln OUTPUT-DEVICE sind hierbei beispielsweise (In Figur 2 nicht explizit dargestellte) ein Bildschirm für Videodaten, Lautsprecher für Audiodaten oder Schnittstellen zu nicht im Kommunikations-Endgerät KE1 enthaltenen Ausgabemitteln wie Drucker oder Massenspeicher.

Der beschriebene Stapel für die Nutzdatenbehandlung RTP, RTCP, AUDIO, VIDEO und MEDIA CONTROL und der beschriebene Stapel für die Signalisierungsbehandlung H.245, H.225.0, H.450.2, H.450.4 und H.450.5 sind über eine Koordinierungsfunktion KOORDINIERUNGSFUNKTION an eine Anwendungsprogramm-Schnittstelle API gekoppelt. Die Koordinierungsfunktion KOORDINIERUNGSFUNKTION koordiniert hierbei das Zusammenspiel der Einheiten dieser Stapel mit der Anwendungsprogramm-Schnittstelle API (API steht für den englischsprachigen Ausdruck Application Programming Interface).

Beispiele für eine Anwendungsprogramm-Schnittstelle API sind TAPI oder JTAPI. Die Anwendungsprogramm-Schnittstelle API vermittelt zwischen Anwendungsprogrammen bzw. einer Benutzeroberfläche und der Koordinierungsfunktion KOORDINIERUNGSFUNKTION.

Neben den für Multimediakommunikation erforderlichen Stapeln, also den beschriebenen Stapeln für die Nutzdatenbehandlung RTP, RTCP, H.225.0, AUDIO, VIDEO und MEDIA CONTROL und für die Signalisierungsbehandlung H.245, H.225.0, H.450.2, H.450.4 und H.450.5 ist auf der rechten Seite in der Figur 2 noch ein Funktionsmodul HTTP-STAPEL dargestellt. Auch dieses Funktionsmodul HTTP-STAPEL setzt auf dem Internetprotokoll IP auf und ist über die Koordinierungsfunktion KOORDINIERUNGSFUNKTION und die Anwendungsprogramm-Schnittstelle API an die Benutzeroberfläche beziehungsweise an Anwendungen ANWENDUNGEN/BENUTZEROBERFLÄCHE angekoppelt. Der Aufbau des Funktionsmoduls HTTP-STAPEL ist in der Figur 2 nicht explizit dargelegt, da er allgemein bekannt ist. Ein solches Funktionsmodul HTTP-STAPEL wird beispielsweise zur Übertragung bei JAVA-Anwendungen eingesetzt.

Figur 1 zeigt ein Ausführungsbeispiel eines Ablaufplans der wesentlichen Teile eines erfindungsgemäßen Verfahren, wenn ein erstes Endgerät KE1 eine Leistungsmerkmalanfrage gemäß H.450.5 zum Parken einer bestehenden Verbindung an ein zweites Endgerät KE2 übermitteln möchte.

Es wird davon ausgegangen, daß zwischen den Endgeräten KE1 und KE2 eine Verbindung besteht und logische Kanäle geöffnet sind. Der Teilnehmer am ersten Endgerät KE1 möchte den zum zweiten Endgerät bestehenden Ruf mit Hilfe des H.450.5-Leistungsmerkmals parken, hat aber die erforderliche Steuersoftware nicht im ersten Endgerät KE1 installiert.

Im ersten Endgerät ruft eine Anwendung oder die Benutzeroberfläche das Realisieren des Leistungsmerkmals Call Park auf. Dieser Vorgang ist in Figur 1 mit 1 gekennzeichnet. Veranlaßt durch den hierzu abgegebenen Befehl wird im Endgerät KE1 geprüft, ob die erforderliche Steuersoftware verfügbar ist. Dieser Vorgang ist in Figur 1 mit 2 gekennzeichnet. Da diese Steuersoftware nicht im ersten Endgerät installiert ist, wird an eine zentrale Einrichtung ZE im Kommunikations-Datennetz eine Aufforderung GetDataRequest zum Übermitteln der Steuersoftware für die Leistungsmerkmalsteuerung übermittelt. Dieser Vorgang ist in Figur 1 mit 3 gekennzeichnet und wird beispielsweise über das HTTP-Funktionsmodul HTTP-STACK abgewickelt. Die Bezeichnung GetDataRequest sowie die meisten nachstehend noch erläuterten, in Figur 1 verwendeten Nachrichtennamen sind hierbei logische Nachrichtennamen, sogenannte Primitives.

Die zentrale Einrichtung ZE bestätigt die Anfrage mit einer Quittungsmeldung GetDataResponse an das erste Endgerät KE1. Dieser Vorgang ist in Figur 1 mit 4 gekennzeichnet. Daraufhin wird die erforderliche Steuersoftware DATA von der zentralen Einrichtung ZE an das erste Endgerät KE1 übermittelt. Bei diesem Vorgang, der in Figur 1 mit 5 gekennzeichnet ist, wird die Software beispielsweise nach Art eines JAVA-Applets übermittelt.

Im ersten Endgerät KE1 wird die erhaltene Steuersoftware zum Realisieren des Leistungsmerkmals installiert. Dieser Vorgang ist in Figur 1 mit 6 gekennzeichnet. Daraufhin wird das Leistungsmerkmal durch ausführen der Leistungsmerkmalsteuerung realisiert. Hierzu übermittelt das erste Endgerät KE1 eine Aufforderungsmeldung cpRequest.Invoke an das zweite Endgerät KE2. Dieser Vorgang ist in Figur 1 mit 7 gekennzeichnet. Der weitere Ablauf zum Realisieren dieses beispielhaft genannten Leistungsmerkmals "Call Park" kann der oben erwähnten ITU-T Draft Recommendation H.405.5 "Call Park and Call Pickup Supplementary Service tor H.323" vom September 1998, insbesondere Figur 2/H.450.5 auf Seite 21, entnommen werden.

## Patentansprüche

1. Verfahren zum Realisieren einer Leistungsmerkmalsteuerung eines Leistungsmerkmals für Echtzeitkommunikation in einem Kommunikations-Datennetz gemäß dem Standard ITU-T H.323, gekennzeichnet durch die folgenden Schritte:
Veranlaßt durch einen in einem Kommunikations-Endgerät verarbeiteten Befehl zum Realisieren des Leistungsmerkmals wird eine Aufforderung zum Übermitteln einer Steuersoftware für die Leistungsmerkmalsteuerung an eine zentrale Einrichtung im Kommunikations-Datennetz übermittelt;
die Steuersoftware wird von der zentralen Einrichtung an das Kommunikations-Endgerät übermittelt und in diesem temporär gespeichert;
die Leistungsmerkmalsteuerung wird durch Abarbeiten der Steuersoftware im Kommunikations-Endgerät ausgeführt.

2. Verfahren nach Anspruch 1, dadurch gekennzeichnet, daß der Befehl zum Realisieren des Leistungsmerkmals als Signalisierungsmeldung von einem fernen Endpunkt des Kommunikations-Datennetzes in das Kommunikations-Endgerät eingegeben worden ist und daß dieser ferne Endpunkt auch die Aufforderung zum Übermitteln der Steuersoftware für die Leistungsmerkmalsteuerung an die zentrale Einrichtung im Kommunikations-Datennetz übermittelt.

3. Verfahren nach Anspruch 1, dadurch gekennzeichnet, daß der Befehl zum Realisieren des Leistungsmerkmals durch die Handlung eines Teilnehmers unmittelbar in das Kommunikations-Endgerät eingegeben worden ist und daß das Kommunikations-Endgerät die Aufforderung zum Übermitteln der Steuersoftware für die Leistungsmerkmalsteuerung an die zentrale Einrichtung im Kommunikations-Datennetz übermittelt.

4. Verfahren nach einem der vorhergehenden Ansprüche, dadurch gekennzeichnet, daß Veranlaßt durch den im Kommunikations-Endgerät verarbeiteten Befehl zum Realisieren des Leistungsmerkmals im Kommunikations-Endgerät geprüft wird, ob die erforderliche Steuersoftware für die Leistungsmerkmalsteuerung verfügbar ist, und daß bei fehlender Verfügbarkeit dieser Steuersoftware die Aufforderung zum Übermitteln der Steuersoftware an die zentrale Einrichtung im Kommunikations-Datennetz übermittelt wird.

5. Verfahren nach Anspruch 2, dadurch gekennzeichnet, daß eine Einrichtung am fernen Endpunkt des Kommunikations-Datennetzes mit Hilfe einer vom Kommunikations-Endgerät empfangenen, die Berechtigungen und technischen Möglichkeiten des Kommunikations-Endgerätes angebenden Signalisierungsmeldung prüft, ob die erforderliche Steuersoftware für die Leistungsmerkmalsteuerung in dem Kommunikations-Endgerät verfügbar ist, und daß bei fehlender Verfügbarkeit dieser Steuersoftware vom fernen Endpunkt an die zentrale Einrichtung die Aufforderung zum Übermitteln der Steuersoftware an das Kommunikations-Endgerät übermittelt wird.
